(19) Europäisches Patentamt
European Patent Office
Office européen des brevets

(11) **EP 1 743 683 A1**

(12) **EUROPEAN PATENT APPLICATION**

(43) Date of publication:
**17.01.2007 Bulletin 2007/03**

(51) Int Cl.:
***A63F 13/00*** *(2006.01)*

(21) Application number: **06253576.0**

(22) Date of filing: **07.07.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **15.07.2005 JP 2005207461**<br>**17.05.2006 JP 2006138223**<br><br>(71) Applicant: **Kabushiki Kaisha Bandai**<br>**Tokyo 111-8081 (JP)** | (72) Inventors:<br>• **Matsuno, Shotaro**<br>**c/o Bandai Co. Ltd.**<br>**Tokyo 111-8081 (JP)**<br>• **Nakanishi, Kengo**<br>**c/o Bandai Co. Ltd.**<br>**Tokyo 111-8081 (JP)**<br><br>(74) Representative: **Nicholls, Michael John**<br>**J.A. KEMP & CO.**<br>**14, South Square**<br>**Gray's Inn**<br>**London WC1R 5JJ (GB)** |

(54) **Game apparatus and its control method**

(57)    In a first operation mode, the location distribution of one or more characters is displayed on a display screen of a display unit (103). In a second operation mode, the location distribution of characters located in azimuths near the azimuth detected by an azimuth sensor (206) is displayed on the display screen of the display unit (103), and game processing is performed in accordance with the operation result to a key group (104) and handle unit (102) in correspondence with this display state.

# F I G. 2

**Description**

FIELD OF THE INVENTION

The present invention relates to a game apparatus and, more particularly, to a technique associated with a portable game apparatus.

BACKGROUND OF THE INVENTION

Conventionally, various portable game apparatuses are known. As one of these portable game apparatuses, a game apparatus disclosed in Japanese Registered Utility Model No. 3046095 is known.

This game apparatus is a handgun type apparatus. A player holds a grip unit of this apparatus, opens an actuation flap sideways, opens a display upward, and depresses a trigger with a muzzle unit pointed to a sound source. As a result, the frequency or waveform pattern of a sampled sonic wave is analyzed by a computer in the apparatus, and a specific monster which is set in advance is selected based on the analysis result.

Whether or not the selected monster appears is determined based on parameters such as time, temperature, and the like. If appearance of the monster is determined, an image of this monster is displayed on a liquid crystal panel. The player operates an arrow button and the trigger to capture this monster. If the monster is successfully captured, the number of captured monsters is updated. Various monsters can be collected by making capturing operations toward various sound sources.

SUMMARY OF THE INVENTION

The inventors of the present invention have focused attention on a technique for providing a game according to an azimuth which the game apparatus main body faces by newly adding an azimuth sensor to the aforementioned conventional portable game apparatus.

It is, therefore, an object of the present invention to provide a game apparatus which searches for and captures characters which exist on a virtual space based on the azimuth which the game apparatus main body faces.

In order to achieve an object of the present invention, for example, a game apparatus of the present invention comprises the following components.

That is, a game apparatus which comprises an operation unit that can be turned by a player, a display unit, and an input unit, comprising:

an azimuth sensor for detecting an azimuth;
a memory for, when characters are virtually located around a position of the azimuth sensor, holding location information indicating a relative positional relationship between each character and the azimuth sensor;
detection means for detecting an input of an operation mode of one of a first operation mode and a second operation mode; and
processing means for performing game processing corresponding to the operation mode detected by the detection means, and
in that when the detection means detects the input of the first operation mode,
the processing means controls the display unit to display a location distribution of at least one character, with reference to the location information of the at least one character held in the memory, and
when the detection means detects the input of the second operation mode,
the processing means controls the display unit to display a location distribution of the characters located in azimuths near the azimuth detected by the azimuth sensor, with reference to the location information of each character held in the memory, and
the processing means performs game processing in accordance with an operation result to the input unit and the operation unit in correspondence with a display state on the display unit.

In order to achieve an object of the present invention, for example, a game apparatus of the present invention comprises the following components.

That is, a game apparatus which comprises an operation unit that can be turned by a player, a display unit, and an input unit, comprising:

an azimuth sensor for detecting an azimuth;
a memory for, when characters are virtually located around a position of the azimuth sensor, holding location information indicating a relative positional relationship between the characters and the azimuth sensor;

means for controlling the display unit to display a location distribution of characters located in azimuths near the azimuth detected by the azimuth sensor with reference to location information of each character held in the memory; and

processing means for performing game processing in accordance with an operation result to the input unit and the operation unit in correspondence with a display state on the display unit.

In order to achieve an object of the present invention, for example, a game apparatus of the present invention comprises the following components.

That is, a game apparatus which comprises an operation unit that can be turned by a player, a display unit, and an input unit, comprising:

an azimuth sensor for detecting an azimuth;

a memory for, when characters are virtually located around a position of the azimuth sensor, holding location information indicating a relative positional relationship between each character and the azimuth sensor;

detection means for detecting an input of an operation mode of one of a first operation mode and a second operation mode; and

processing means for performing game processing corresponding to the operation mode detected by the detection means, and

in that when the detection means detects the input of the first operation mode,

the processing means controls the display unit to display a location distribution of at least one character based on the location information of the at least one character held in the memory,

when the detection means detects the input of the second operation mode,

the processing means controls the display unit to make a display indicating a probability of occurrence of battle with a character located in an azimuth closest to the azimuth detected by the azimuth sensor with reference to the location information of each character held in the memory, and

when the battle has occurred, the processing means performs game processing in accordance with an operation result to the input unit and the operation unit in correspondence with a display state on the display unit.

In order to achieve an object of the present invention, for example, a game apparatus of the present invention comprises the following components.

That is, a game apparatus which comprises an operation unit that can be turned by a player, a display unit, and an input unit, comprising:

an azimuth sensor for detecting an azimuth;

a memory for, when characters are virtually located around a position of the azimuth sensor, holding location information indicating a relative positional relationship between the characters and the azimuth sensor;

means for controlling the display unit to make a display indicating a probability of occurrence of battle with a character located in an azimuth closest to the azimuth detected by the azimuth sensor with reference to location information of each character held in the memory; and

means for, when the battle has occurred, performing game processing in accordance with an operation result to the input unit and the operation unit in correspondence with a display state on the display unit.

In order to achieve an object of the present invention, for example, a game apparatus of the present invention comprises the following components.

That is, a game apparatus which comprises an operation unit and a display unit, comprising:

an azimuth sensor for detecting an azimuth;

a memory which holds, when characters are virtually located around a position of the azimuth sensor, location information indicating a relative positional relationship between each character and the azimuth sensor;

detection means for detecting an input of an operation mode of one of a first operation mode and a second operation mode; and

processing means for performing game processing corresponding to the operation mode detected by the detection means, and

in that when the detection means detects the input of the first operation mode,

the processing means controls the display unit to display a location distribution of at least one character with reference to the location information of the at least one character held in the memory, and

when the detection means detects the input of the second operation mode,

the processing means makes notification according to a difference between an azimuth of a character located in an azimuth closest to the azimuth detected by the azimuth sensor, and the azimuth detected by the azimuth sensor, with reference to the location information of each character held in the memory, and

the processing means performs game processing in accordance with a display state on the display unit or an operation result to the operation unit based on the notification result.

In order to achieve an object of the present invention, for example, a method of controlling a game apparatus of the present invention comprises the following steps.

That is, a method of controlling a game apparatus, which comprises an operation unit that can be turned by a player, a display unit, an input unit, an azimuth sensor for detecting an azimuth, and a memory, comprising:

a storage control step of storing, when characters are virtually located around a position of the azimuth sensor, location information indicating a relative positional relationship between each character and the azimuth sensor in the memory;

a detection step of detecting an input of an operation mode of one of a first operation mode and a second operation mode; and

a processing step of performing game processing corresponding to the operation mode detected in the detection step, and

in that the processing step includes steps of:

controlling, when the input of the first operation mode is detected in the detection step, the display unit to display a location distribution of at least one character based on the location information of the at least one character held in the memory, and

controlling, when the input of the second operation mode is detected in the detection step, the display unit to display a location distribution of the characters located in azimuths near the azimuth detected by the azimuth sensor, with reference to the location information of each character held in the memory, and

performing game processing in accordance with an operation result to the input unit and the operation unit in correspondence with a display state on the display unit.

In order to achieve an object of the present invention, for example, a method of controlling a game apparatus of the present invention comprises the following steps.

That is, a method of controlling a game apparatus, which comprises an operation unit that can be turned by a player, a display unit, an input unit, an azimuth sensor for detecting an azimuth, and a memory comprising:

a storage control step of storing, when characters are virtually located around a position of the azimuth sensor, location information indicating a relative positional relationship between each character and the azimuth sensor in the memory;

a step of controlling the display unit to display a location distribution of characters located in azimuths near the azimuth detected by the azimuth sensor with reference to location information of each character held in the memory; and

a step of performing game processing in accordance with an operation result to the input unit and the operation unit in correspondence with a display state on the display unit.

In order to achieve an object of the present invention, for example, a method of controlling a game apparatus of the present invention comprises the following arrangement.

That is, a method of controlling a game apparatus, which comprises an operation unit that can be turned by a player, a display unit, an input unit, an azimuth sensor for detecting an azimuth, and a memory, comprising:

a storage control step of storing, when characters are virtually located around a position of the azimuth sensor, location information indicating a relative positional relationship between each character and the azimuth sensor in the memory;

a detection step of detecting an input of an operation mode of one of a first operation mode and a second operation mode; and

a processing step of performing game processing corresponding to the operation mode detected in the detection step, and

in that the processing step includes steps of:

controlling, when the input of the first operation mode is detected in the detection step, the display unit to display a location distribution of at least one character based on the location information of the at least one character held in the memory, and

controlling, when the input of the second operation mode is detected in the detection step, the display unit to make a display indicating a probability of occurrence of battle with a character located in an azimuth closest to the azimuth detected by the azimuth sensor with reference to the location information of each character held in the memory, and

performing, when the battle has occurred, game processing in accordance with an operation result to the input unit and the operation unit in correspondence with a display state on the display unit.

In order to achieve an object of the present invention, for example, a method of controlling a game apparatus of the present invention comprises the following steps.

That is, a method of controlling a game apparatus, which comprises an operation unit that can be turned by a player, a display unit, an input unit, an azimuth sensor for detecting an azimuth, and a memory, comprising:

a storage control step of storing, when characters are virtually located around a position of the azimuth sensor, location information indicating a relative positional relationship between each character and the azimuth sensor in the memory;

a step of controlling the display unit to make a display indicating a probability of occurrence of battle with a character located in an azimuth closest to the azimuth detected by the azimuth sensor with reference to location information of each character held in the memory; and

a step of performing, when the battle has occurred, game processing in accordance with an operation result to the input unit and the operation unit in correspondence with a display state on the display unit.

In order to achieve an object of the present invention, for example, a method of controlling a game apparatus of the present invention comprises the following steps.

That is, a method of controlling a game apparatus, which comprises an operation unit, a display unit, an azimuth sensor for detecting an azimuth, and a memory, comprising:

a storage control step of storing, when characters are virtually located around a position of the azimuth sensor, location information indicating a relative positional relationship between each character and the azimuth sensor in the memory;

a detection step of detecting an input of an operation mode of one of a first operation mode and a second operation mode; and

a processing step of performing game processing corresponding to the operation mode detected in the detection step, and

in that the processing step includes a step of:

controlling, when the input of the first operation mode is detected in the detection step, the display unit to display a location distribution of at least one character with reference to the location information of the at least one character held in the memory, and

the processing step also includes steps of:

making, when the input of the second operation mode is detected in the detection step, notification according to a difference between an azimuth of a character located in an azimuth closest to the azimuth detected by the azimuth sensor, and the azimuth detected by the azimuth sensor with reference to the location information of each character held in the memory; and

performing game processing in accordance with a display state on the display unit or an operation result to the operation unit based on the notification result.

Other features and advantages of the present invention will be apparent from the following description taken in conjunction with the accompanying drawings, in which like reference characters designate the same or similar parts throughout the figures thereof.

BRIEF DESCRIPTION OF THE DRAWINGS

The accompanying drawings, which are incorporated in and constitute a part of the specification, illustrate embodiments of the invention and, together with the description, serve to explain the principles of the invention.

Fig. 1 is a perspective view showing the outer appearance of a portable game apparatus according to the first embodiment of the present invention;

Fig. 2 is a block diagram showing the hardware arrangement of a portable game apparatus 100 according to the first embodiment of the present invention;

Fig. 3 is a flowchart of the main processing to be executed by the portable game apparatus 100 (CPU 201);

Fig. 4 is a view for explaining a display position of a marker;

Fig. 5 shows a display example of the location distribution of characters on a display unit 103; and

Fig. 6 is a flowchart of the game processing in a second operation mode.

Fig. 7 is a flowchart showing the game processing in the second operation mode according to the fourth embodiment of the present invention;

Fig. 8A shows a display example of a display window to be displayed on the display section 103 in step S703;

Fig. 8B shows a display example of a battle window;

Fig. 9 is a perspective view showing the outer appearance of a portable game apparatus 900 according to the fifth embodiment of the present invention;

Fig. 10 is a block diagram showing the hardware arrangement of the portable game apparatus 900 according to the fifth embodiment of the present invention;

Fig. 11 is a side view of the portable game apparatus 900 when a second main body 900b is rotated 90° around an axis 950; and

Fig. 12 is a flowchart of the game processing in the second operation mode.

DETAILED DESCRIPTION OF THE PREFERRED EMBODIMENTS

Preferred embodiments of the present invention will now be described in detail in accordance with the accompanying drawings.

[First Embodiment]

This embodiment will explain a portable game apparatus which provides a game for "fishing up" a character.

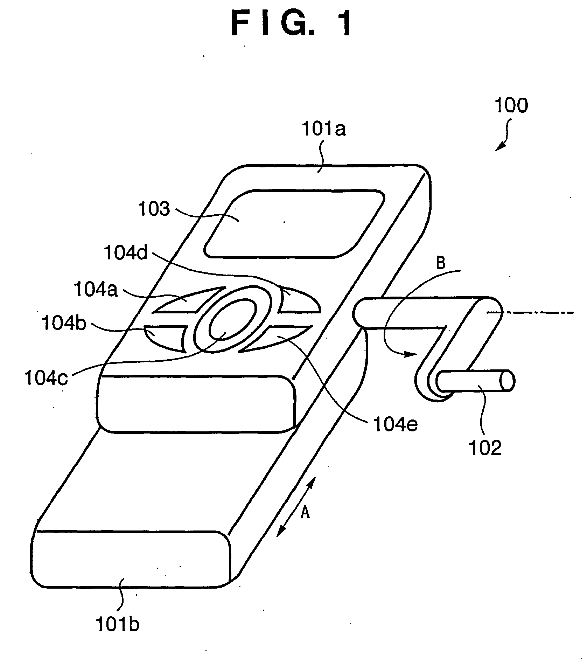

Fig. 1 is a perspective view showing the outer appearance of a portable game apparatus according to this embodiment. As shown in Fig. 1, a portable game apparatus 100 is formed by a first main body 101a and second main body 101b. The second main body 101b is attached to the first main body 101a to be slidable in a direction substantially parallel to the latter, as indicated by an arrow A in Fig. 1.

The first main body 101a is comprised of a display unit 103, input units (for example, keys in Fig. 1) 104a to 104e, and operation unit (for example, a handle unit in Fig. 1) 102. The display unit 103 comprises, e.g., a liquid crystal display, and displays various game screens to be described later.

The keys 104a to 104e are used by the player to input various operation instructions. In the following description, the keys 104a to 104e will sometimes be referred to as a "key group 104" together.

The handle unit 102 is operated by the player to fish a character. The handle 102 is attached to the first main body 101a to be rotatable in a direction indicated by an arrow B in Fig. 1 around an axis (indicated by the dotted line in Fig. 1) of an attachment unit to the first main body 101a.

In the following description of this embodiment, assume that the portable game apparatus has the outer appearance arrangement shown in Fig. 1. However, the positions, shapes, and the like of the display unit 103, keys 104a to 104e, and handle unit 102 are not limited to those in Fig. 1, and various modifications may be made. As will be apparent from the following description, the following description can be applied to each individual modification.

Fig. 1 and subsequent figures mainly show parts used in the following description, and do not show any parts such as a power switch, and the like, which do not constitute the gist of this embodiment.

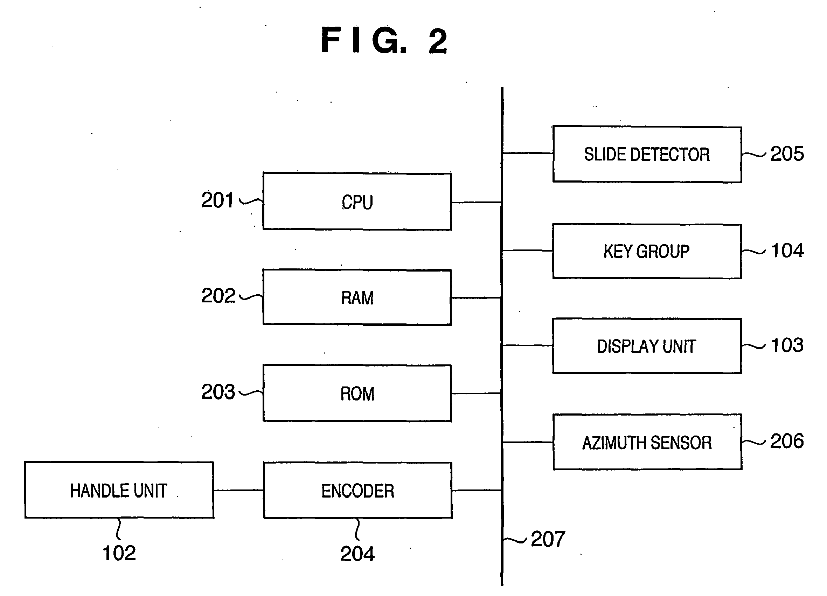

Fig. 2 is a block diagram showing the hardware arrangement of the portable game apparatus 100 according to this embodiment. Note that the same reference numerals in Fig. 2 denote the same parts as in Fig. 1, and a description thereof will be omitted.

Reference numeral 201 denotes a CPU which controls the entire portable game apparatus 100 using programs and data stored in a ROM 203, data temporarily held in a RAM 202, and the like, and executes game processing to be described later. The CPU 201 has an internal timer (not shown), which can measure time.

Reference numeral 202 denotes a RAM which can provide various areas as needed such as an area for temporarily storing data which is being processed, an area for temporarily storing the measurement result of an encoder 204 as data, an area for temporarily storing the detection result of an azimuth sensor 206 as data, a work area used by the CPU 201 upon executing various kinds of processing, and the like.

Reference numeral 203 denotes a ROM which stores programs and data required to make the CPU 201 control the overall portable game apparatus 100 and execute game processing to be described later. The stored data include parameters associated with characters, and the parameters include initial vital forces (or health powers), weights, and the like of characters. These parameters are loaded onto the RAM 202 and are used in processing, as needed.

Reference numeral 204 denotes an encoder which measures the rotation angle of the handle unit 102. The measurement result of the encoder 204 is held in the RAM 202 as data.

Reference numeral 205 denotes a slide detector. The second main body 101b can slide across the first main body 101a, as described above, and has a state slid to the fullest extent to one side, and a state slid to the fullest extent to the other side. The slide detector 205 detects one of the former state (a state in which substantially the entire body of the second main body 101b overlaps the first main body 101a) and the latter state (a state in which substantially the entire body of the second main body 101b does not overlap the first main body 101a), and notifies the CPU 201 of the detection result.

When the detection state indicates the former state, the CPU 201 sets the operation mode of the portable game apparatus 100 in a first operation mode; when the detection state indicates the latter state, the CPU 201 sets the operation mode of the portable game apparatus 100 in a second operation mode. The first and second operation modes will be described later.

Reference numeral 206 denotes an azimuth sensor which detects the azimuth of the main body. The detection result is held in the RAM 202 as data. Note that the detection precision of the azimuth sensor 206 is not particularly limited.

Reference numeral 207 denotes a bus which interconnects the aforementioned units.

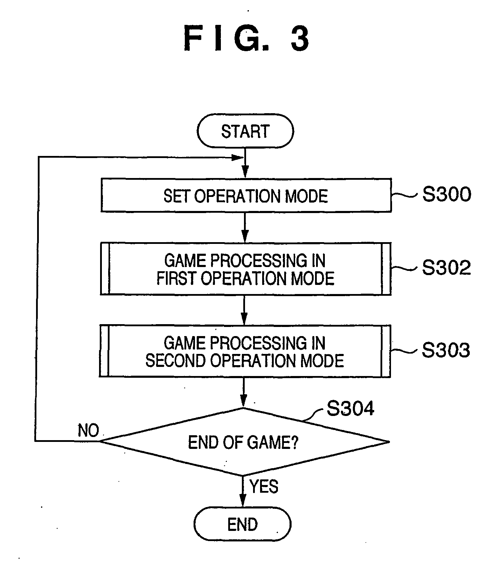

The main processing to be executed by the portable game apparatus 100 (CPU 201) will be described below using Fig. 3 which shows the flowchart of this processing. Note that the program and data for making the CPU 201 execute the processing according to the flowchart shown in Fig. 3 are stored in the ROM 203, and the portable game apparatus 100 according to this embodiment executes respective processes to be described below when the CPU 201 executes the processing using the program and data. Execution of the processing according to the flowchart in Fig. 3 is started when the player turns on the power switch of the portable game apparatus and inputs a game start instruction using the key group 104.

The CPU 201 accepts the detection result sent from the slide detector 205, and sets one of the first operation mode and the second operation mode according to the detection result (step S300), as described above.

As a result, if the CPU 201 sets the first operation mode, the flow advances to step S302, and the CPU 201 executes game processing in the first operation mode (step S302). After that, if the CPU 201 sets the second operation mode, the flow advances to step S303, and the CPU 201 executes game processing in the second operation mode (step S303). Details of the processes in steps S302 and S303 will be described later.

If the player inputs a game end instruction using the key group 104 or if a game end condition is met, the processing according to this flowchart ends. However, if the player does not input any game end instruction or if the game end condition is not met, the flow returns to step S300 to execute the subsequent processes.

The game processing in the first operation mode and that in the second operation mode will be described below.

<Game Processing in First Operation Mode>

The game processing in the first operation mode will be described first. Assuming that characters to be fished up are virtually located within a surrounding area having the position of the azimuth sensor 206 as the center, appropriate azimuth angles and (virtual) distances are given to the characters to be located.

The azimuth angle indicates an azimuth angle from the position of the azimuth sensor 206 to the location of each character. The distance indicates a distance from the position of the azimuth sensor 206 to the location of each character. Hence, "locate a character" means registration of set data of the azimuth angle and distance (location information indicating a relative positional relationship between the character to be located and the azimuth sensor 206) in the RAM 202.

A method of generating this set data is not particularly limited, and the distance and azimuth angle can be randomly given, or they may be determined according to predetermined rules for each character.

In this manner, various methods may be used to locate characters. For example, the following method may be used. That is, set data of an azimuth of appearance, distance, and appearance date and time is stored in the ROM 203 for each character. As for a character whose appearance date and time matches the current date and time measured by the CPU 201, this character is located at the azimuth angle and distance included in the set data together with this appearance date and time.

After the characters are located, the CPU 201 moves the individual characters. When the characters are moved, the azimuth angles and distances of the characters are changed according to their movements. Hence, the CPU 201 executes processing for updating the azimuth angles and distances of the respective characters managed in the RAM 202 in accordance with their movements. Hence, the current azimuth angles and distances of the respective characters are managed in the RAM 202.

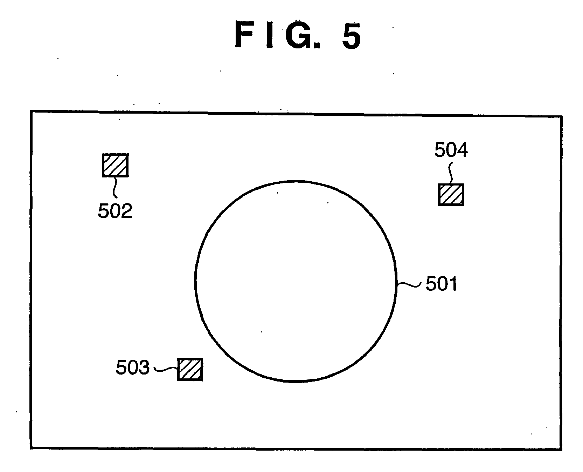

The CPU 201 displays the location distribution of the characters on the display screen of the display unit 103. This display will be described below. Fig. 5 shows a display example of the location distribution of the characters on the display unit 103.

Referring to Fig. 5, reference numeral 501 denotes a circular area which has the position of the azimuth sensor 206 as the center; and 502 to 504, markers indicating the positional relationships of the respective characters relative to the position of the azimuth sensor 206.

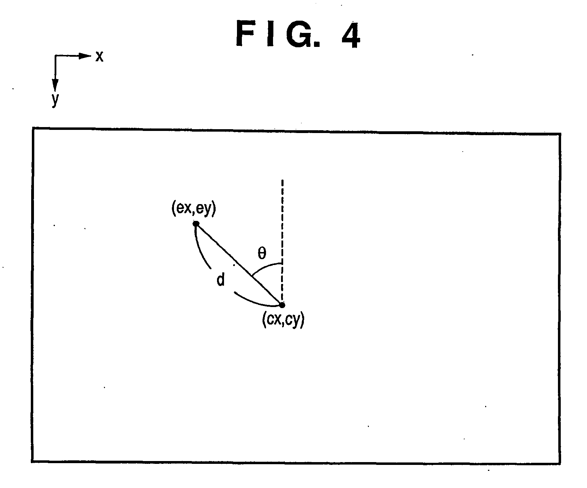

Note that the display positions of the markers 502 to 504 will be described below using Fig. 4. Fig. 4 is a view for explaining the display position of a marker. Let (cx, cy) be the coordinates of the position of the azimuth sensor 206, and θ and d be the azimuth angle and direction (managed in the RAM 202) of a character (the up direction of the screen is an azimuth angle = 0°). Then, the coordinates (ex, ey) of the display position of the marker corresponding to this character are given by:

$$ex = cx - \sin(\theta) \times d'$$

$$ey = cy + \cos(\theta) \times d'$$

where d' is the distance obtained by normalizing (reducing) the distance d in accordance with the display screen size of the display unit 103. At any rate, the display unit 103 displays the position of each character based on the direction and distance viewed from the position of the azimuth sensor 206 on its display screen. Hence, the present invention is not limited to the display mode shown in Fig. 5 as long as display according to such purport is made, and various display modes may be used.

When the marker displayed on the display screen of the display unit 103 is located within the circular area 501, the CPU 201 flickers the circular area or displays a specific marker image to give a warning indicating that the character corresponding to this marker is located within a predetermined distance range with respect to the position of the azimuth sensor 206. If the portable game apparatus of this embodiment comprises a sound generator and sound output unit, a warning by means of a sound may be generated using them.

Also, as the marker becomes closer to the circular area 501, the flickering speed may be increased, or the sound volume may be turned up.

As described above, in the game processing in the first operation mode, the set data of the location of the character and the distance between the location of the character and the azimuth sensor 206 is managed in the RAM 202, and the distribution of the locations of the characters relative to the position of the azimuth sensor 206 is displayed on the display screen of the display unit 103. When a character approaches to fall within a predetermined distance range from the position of the azimuth sensor 206, a warning that advises accordingly is given.

<Game Processing in Second Operation Mode>

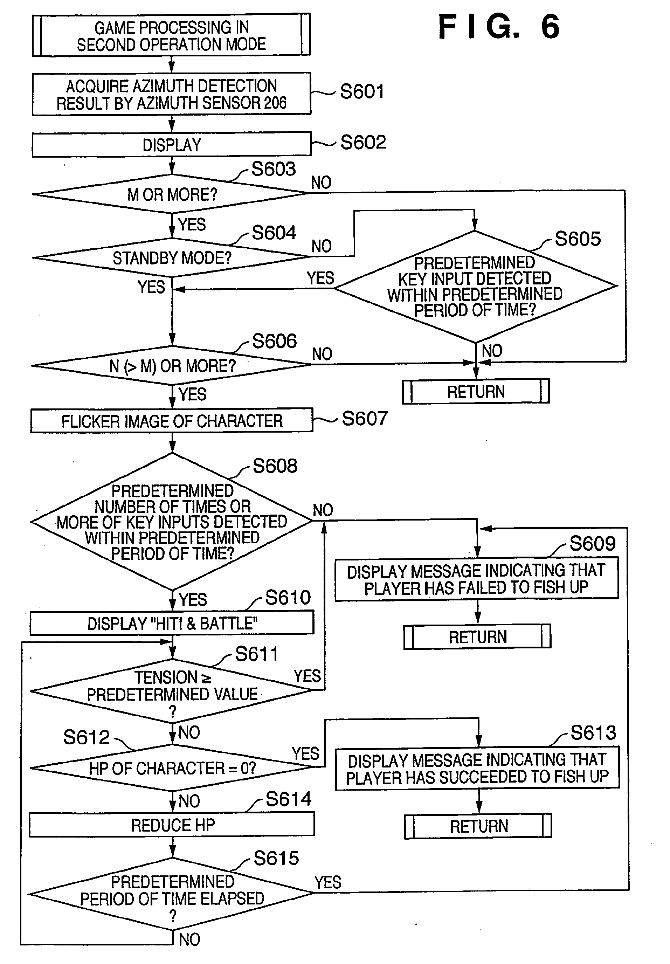

The game processing in the second operation mode will be described below. Fig. 6 is a flowchart of the game processing in the second operation mode.

When the control enters the second operation mode, the CPU 201 activates the azimuth sensor 206 to detect the azimuth of the azimuth sensor 206 itself, and stores the detected azimuth in the RAM 202 as data (step S601).

Next, the CPU 201 refers to the azimuth angles of the respective characters managed in the RAM 202 to specify characters having azimuth angles, which have differences from the azimuth acquired in step S601 to be equal to or smaller than a predetermined amount, and displays markers at the corresponding positions on the display screen of the display unit 103 (step S602). The display position of each marker is as has been described above using Fig. 4. In this manner, the CPU 201 can display the location distribution of characters which are located in azimuths near the direction in which the portable game apparatus currently faces (the azimuth detected by the azimuth sensor 206) on the display screen of the display unit 103.

The CPU 201 counts the number of markers currently displayed on the display screen of the display unit 103, and checks if the count value is equal to or larger than a predetermined value M (step S603). If it is determined as a result of checking in step S603 that the count value is smaller than the predetermined value M, no character can be fished up, and the flow returns to step S304.

On the other hand, if it is determined as a result of checking that the count value is equal to or larger than the predetermined value M, the flow advances to step S604, and the CPU 201 checks if a standby mode to be described later is set (step S604). If it is determined as a result of checking that the standby mode is currently set, the flow advances to step S606. The processing in step S606 and subsequent steps will be described later.

On the other hand, if the standby mode is not set, the flow advances to step S605. In step S605, the CPU 201 makes an indication used to indicate that the count value is equal to or larger than the predetermined value M on the display screen of the display unit 103, and starts its internal timer (step S605). As the indication used to indicate that the count value is equal to or larger than the predetermined value M, for example, a predetermined image may flicker, or when a light-emitting element such as an LED or the like is provided to this portable game apparatus, it may flicker.

Note that as the location distribution of the characters is changing all the time, the number of markers displayed on the display screen of the display unit 103 and their display positions are changing every second.

If the number of markers currently displayed on the display screen of the display unit 103 is equal to or larger than the predetermined value M, the player cannot fish up a character unless he or she presses a predetermined key of the key group 104 within a predetermined period of time (e.g., 1 sec). Hence, the CPU 201 checks in step S605 if the predetermined key is pressed within a predetermined period of time after the start of the timer (step S605). If the predetermined key is not pressed, the flow returns to step S304.

On the other hand, if it is detected that the predetermined key of the key group 104 is pressed within the predetermined period of time after the start of the timer, the control enters the standby mode (first step), and the flow advances to step S606. In step S606, the CPU 201 counts the number of markers currently displayed on the display screen of the display unit 103, and checks if the count value is equal to or larger than a predetermined value N (> M) (step S606).

If it is determined as a result of checking in step S606 that the count value is smaller than the predetermined value N, the flow returns to step S304.

On the other hand, if it is determined as a result of checking that the count value is equal to or larger than the predetermined value N, the flow advances to step S607, and the CPU 201 flickers a character image on the display screen of the display unit 103 (step S607). Note that various display modes may be used as that in step S607.

If the number of markers currently displayed on the display screen of the display unit 103 is equal to or larger than the predetermined value N (> M), the player cannot fish up a character unless he or she presses a predetermined key of the key group 104 a predetermined number of times within a predetermined period of time. Therefore, the player presses the predetermined key of the key group 104 a predetermined number of times within the predetermined period of time.

Hence, upon detection of the first pressing of the predetermined key since the flow advances to step S608, the CPU 201 starts the internal timer from the detection timing, and checks if the predetermined key is pressed a predetermined number of times or more (e.g., 10 times or more) within the predetermined period of time (e.g., 3 sec) (step S608).

If it is determined as a result of checking that 10 or more key inputs cannot be detected within 3 sec, the flow advances to step S609, and the CPU 201 displays a message indicating that the player has failed to fish up the character on the display screen of the display unit 103, and the flow then returns to step S304.

After the display processing in step S609 is executed, the game processing in the second operation mode is not continued, and the game processing in the first operation mode is performed. Hence, in step S609 the CPU 201 also displays a message that prompts the player to slide across the second main body 101b so that substantially the entire body of the second main body 101b overlaps the first main body 101a, on the display screen of the display unit 103.

On the other hand, If 10 or more key inputs are detected within 3 sec, the flow advances to step S610 to enter a battle mode (second step) with the character, and the CPU 201 displays a message indicating that the battle with the character starts on the display screen of the display unit 103 (step S610). For example, the CPU 201 displays a message "HIT! & BATTLE!" on the display screen of the display unit 103.

After that, the image of the character as an opponent is displayed on the display screen of the display unit 103. The player turns the handle unit 102 (in the direction indicated by the arrow B in Fig. 1) so as to fish up the opponent character. When the player turns the handle unit 102, its rotation angle is measured by the encoder 204. Also, since the CPU 201 starts its internal timer, it calculates a rotational velocity (rotation angle/sec) of the handle unit 102 based on these variables (step S611). The CPU 201 reads out a parameter indicating the weight of the opponent character from the ROM 203 or RAM 202 and refers to it (step S611). Then, the CPU 201 calculates using the rotational velocity and weight:

```
Tension of fishing line = weight + rotational velocity
```

As can be seen from this equation, the tension increases with increasing weight of the opponent character. Also, the tension increases with increasing rotational velocity.

The CPU 201 compares the calculated tension value with a predetermined threshold to check if the tension is equal to or higher than the predetermined threshold (step S611).

If the tension is equal to or higher than the predetermined threshold, the flow advances to step S609 to display a message indicating that the player has failed to fish up the opponent character on the display screen of the display unit 103. The flow then returns to step S304. That is, the opponent character cannot be fished up unless the tension is at least lower than the predetermined threshold.

On the other hand, if the tension is lower than the predetermined threshold, the flow advances to step S612 to check with reference to data indicating the health power (to be abbreviated as HP hereinafter) of the opponent character held in the RAM 202 if an HP value = 0 (step S612).

If it is determined as a result of checking in step S612 that HP = 0, the flow advances to step S613 to display a message indicating that the player has succeeded to fish up the opponent character on the display screen of the display unit 103 (step S613), and the flow returns to step S304.

On the other hand, if HP ≠ 0, the flow advances to step S614 to execute processing for reducing HP by an amount corresponding to the rotational velocity calculated in step S611 (step S614). For example, if the player has turned the handle unit 102 more times, HP is reduced by a larger amount.

After the control enters the battle mode, the opponent character moves not to be easily fished up. As a result, the azimuth and distance of this character change. Hence, the player variously changes the azimuth of this portable game apparatus 100 to turn the direction (the azimuth measured by the azimuth sensor 206) of the portable game apparatus 100 to the azimuth where this character exists. When the direction of the portable game apparatus 100 agrees with the azimuth where the character exists, the image of that character is displayed on the display screen of the display unit 103.

Hence, in step S614 the HP of this character is reduced only when the image of the character is displayed on the display screen of the display unit 103 and the player turns the handle unit 102 while keeping the tension to be lower than the predetermined threshold.

In this manner, the HP of the character is reduced not by simply turning the handle unit 102. Since the player searches for the azimuth where the character exists, and turns the handle unit 102 only after the image of this character is displayed on the display screen of the display unit 103, the HP of the character is reduced. Therefore, an operation to be done by the player to fish up the character becomes harder, thus improving the game difficulty. Note that the moving speeds of the characters may be different depending on the characters.

Next, the CPU 201 checks if a predetermined period of time has elapsed after the control enters the battle mode (step S615). That is, since the battle with the opponent character must be done within the predetermined period of time (this "predetermined period of time" may vary depending on the types of opponent characters), if the predetermined period of time has elapsed, the flow advances to step S609 to display a message indicating that the player has failed to fish up the character on the display screen of the display unit 103, and the flow then returns to step S304.

On the other hand, if the predetermined period of time has not elapsed yet, the flow returns to step S611 to repeat the subsequent processes.

In this embodiment, the operation mode is switched by sliding the second main body 101b. However, the present invention is not limited to this. For example, the operation mode may be switched based on, e.g., a predetermined key input of the key group 104.

As for the operation method and operation timing for the key group 104 to fish up the character, and the display mode on the display screen of the display unit 103, various modifications may be made, and the present invention is not limited to the above specific embodiment.

According to the arrangement of this embodiment, the game which virtually locates characters around the azimuth sensor 206, i.e., the player of this portable game apparatus 100, and allows the player to fish up any of the characters can be provided. This game can be implemented without any complicated three-dimensional coordinate calculations unlike known virtual reality.

In this embodiment, in order to start the battle mode, the predetermined key is pressed a predetermined number of times or more within the predetermined period of time in the state in step S607. However, the condition, operation, and the like to start the battle mode are not particularly limited. For example, a condition that "the handle unit 102 is turned a predetermined number of times within a predetermined period of time in the state in step S607" may be used.

[Second Embodiment]

When the character is fished up, as has been described in the first embodiment, data associated with the fished character is held in the RAM 202. If the portable game apparatus 100 incorporates a storage device such as a hard disk which can held information after power OFF, such data can be stored in this storage device.

Therefore, when the player instructs a mode for displaying a list of information associated with the characters which were previously fished up by him or her on the display screen of the display unit 103 using the key group 104, the CPU 201 reads out the data associated with the fished characters from such storage device, and displays a list of information associated with the fished characters such as the images, names, weights, fished dates and times, and the like of the fished characters on the display screen of the display unit 103 like a picture book.

Also, a mode for bringing up the fished character may be provided. Furthermore, a mode for converting the fished character into coins that can be used in this game and purchasing items by the converted coins may be provided.

Such items may include those which allow the player to fish up a character more efficiently. For example, such item may reduce the threshold to be compared with the tension.

The portable game apparatus 100 may comprise a communication unit which can make data communications with other portable game apparatuses. In this case, the following game may be carried out. That is, the player may play the game for fishing up characters using his or her game apparatus, and may exchange information associated with fished characters with another player via the communication unit after an elapse of a predetermined period of time. Thus, a player who fished up the bigger character is checked by each other's game apparatuses to determine a winner.

[Third Embodiment]

In the first embodiment, characters having the azimuth angles, which have differences from the azimuth acquired in step S601 to be equal to or smaller than a predetermined amount are specified, and markers are displayed at corresponding positions on the display screen of the display unit 103 in step S602. However, in this embodiment, in step S602 a character having the azimuth angle closest to the azimuth acquired in step S601 is specified, and the probability of occurrence of the battle with the specified character is displayed on the display screen of the display unit 103. This probability is indicated by the number of markers displayed on the display screen of the display unit 103. That is, the probability of the battle becomes higher with increasing number of markers. Note that the display method of the probability is not particularly limited.

Then, this probability (corresponding to the number of displayed markers) changes according to predetermined rules or randomly. The CPU 201 performs change control of the probability.

The processes to be executed in step S603 and subsequent steps are the same as those in the first embodiment. When the standby mode is set and the number of markers currently displayed on the display screen of the display unit 103 is equal to or larger than the predetermined value N (> M), since the probability of occurrence of the battle with the character having the azimuth angle closest to the azimuth acquired in step S601 is equal to or higher than a predetermined value, the processes in step S603 and subsequent steps are executed to battle with this character.

[Fourth Embodiment]

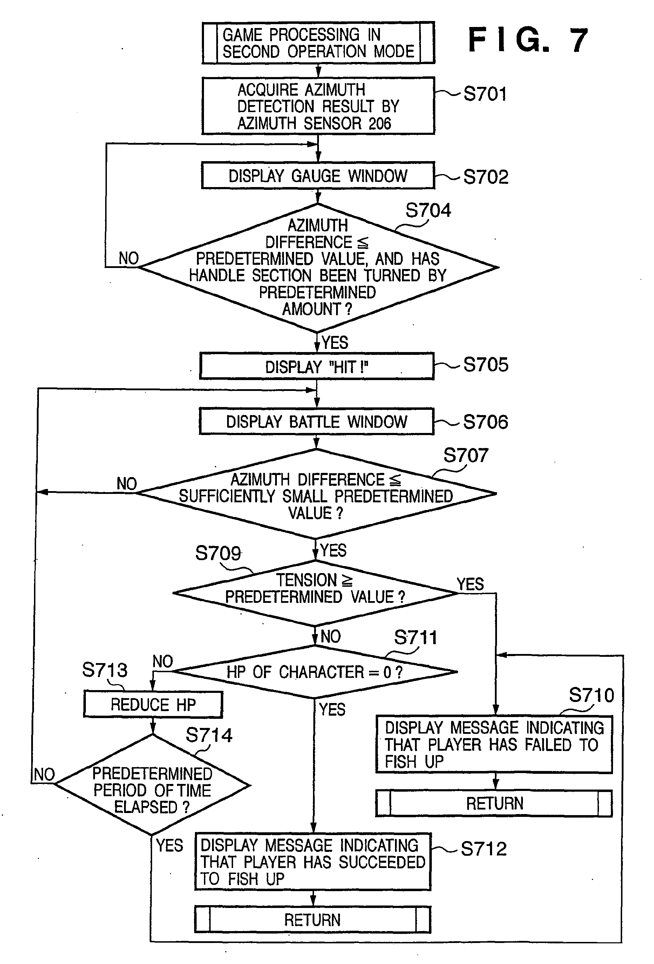

This embodiment will explain another processing in the second operation mode. Only the processing in the second operation mode is different in this embodiment, and other points are the same as those in the first embodiment. Fig. 7 is a flowchart showing the game processing in the second operation mode according to this embodiment.

When the control enters the second operation mode, the CPU 201 activates the azimuth sensor 206 to make it detect its own azimuth, and stores the detected azimuth in the RAM 202 as data (step S701).

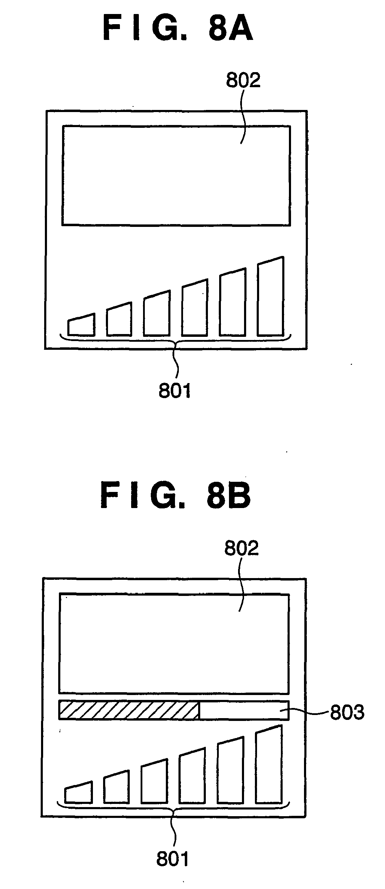

Next, the CPU 201 refers to the azimuth angles of the respective characters managed in the RAM 202 to specify a character having an azimuth angle closest to the azimuth acquired in step S701, and displays a gauge window having a length corresponding to the difference (azimuth difference) between the azimuth angle of the specified character and the azimuth acquired in step S701 on the display screen of the display section 103 (step S702). Fig. 8A shows a display example of the display screen displayed on the display section 103 in step S702. Referring to Fig. 8A, reference numeral 801 denotes a gauge which is formed by a plurality of gauge blocks. The length of the gauge changes depending on the number of gauge blocks to be displayed. The length of this gauge (the number of gauge blocks to be displayed) becomes smaller (the number of gauge blocks to be displayed becomes smaller) with increasing azimuth difference, or it becomes larger (the number of gauge blocks to be displayed becomes larger) with decreasing azimuth difference. For example, when the azimuth difference is 180°, one gauge block is displayed; when the azimuth difference is 0°, a maximum number of (6 in Fig. 8A) gauge blocks are displayed. In this way, the player can confirm the azimuth difference from a character which is located at an azimuth angle closest to an azimuth near the direction in which the portable game apparatus currently faces (the azimuth detected by the azimuth sensor 206) by observing the gauge.

When the azimuth difference becomes equal to or smaller than a predetermined value, the image of the character located at the azimuth angle closest to the azimuth acquired in step S701 is displayed on an area 802 on the window of Fig. 8A. In this case, the player may be audibly notified of that fact, or if the portable game apparatus 100 comprises an LED, he or she may be notified of that fact by flickering the LED. The notification mode is not particularly limited as along as the purpose of notifying that the azimuth difference becomes equal to or smaller than the predetermined value remains the same.

If the gauge length becomes maximum (i.e., when the azimuth difference becomes sufficiently small), the CPU 201 checks if the handle section 102 has been turned a predetermined amount (step S704). The method of acquiring the turning amount of the handle section 102 is the same as that in the first embodiment. As a result, if the gauge length becomes maximum and the handle section 102 has been turned the predetermined amount, the flow advances to step S705; otherwise, the flow returns to step S702.

In step S705, the CPU 201 displays, on the display screen of the display section 103, a message indicating that the battle starts with the character, which is displayed on the area 802 when the gauge length becomes maximum (i.e., the azimuth difference becomes sufficiently small) and the handle section 102 has been turned the predetermined amount (step S705). For example, the CPU 201 displays a message "HIT!" on the display screen of the display section 103. Then, the CPU 201 displays a battle window shown in Fig. 8B on the display screen of the display section 103 (step S706). Fig. 8B shows a display example of the battle window. When the battle has started, since the character as an opponent begins to move for escape, the azimuth angle of this character changes sequentially. Therefore, in step S706 the CPU 201 further displays the direction in which the portable game apparatus 100 is to face on the display screen of the display section 103 so that the azimuth of the portable game apparatus 100 matches the azimuth angle of the opponent character.

For example, let $\alpha$ be the azimuth angle of the opponent character, and $\beta$ be the current azimuth of the portable game apparatus 100, and assume that the azimuth angle increases clockwise to have the player as the center. If $\alpha > \beta$, an image of a right-pointing arrow is displayed on the display screen of the display section 103; if $\alpha < \beta$, an image of a left-pointing arrow is displayed on the display screen of the display section 103. Of course, in step S706 the CPU 201 executes the processing for sequentially acquiring the azimuth of the portable game apparatus 100 as in step S701. When the azimuth difference between the azimuth of the portable game apparatus 100 and that of the opponent character becomes equal to or smaller than the predetermined value, the image of the opponent character is displayed on the area 802 on the window of Fig. 8B.

Next, the CPU 201 checks if the azimuth difference is equal to or smaller than a sufficiently small predetermined value (step S707). If the azimuth difference is not smaller than the predetermined value, the flow returns to step S706. On the other hand, if the azimuth difference is equal to or smaller than the predetermined value, the flow advances to step S709 to execute the same processing as in step S611 above. That is, the CPU 201 calculates a rotational velocity (rotation angle/sec) of the handle section 102, and reads out a parameter indicating the weight of the opponent character from the ROM 203 onto the RAM 202 and refers to it. Then, the CPU 201 calculates the tension of a fishing line using the rotational velocity and the parameter of weight by the above method. The CPU 201 then compares the calculated tension value with a predetermined threshold to check if the tension is equal to or higher than the predetermined threshold (step S709) .

If the tension is equal to or higher than the predetermined threshold, the flow advances to step S710 to display a message indicating that the player has failed to fish up the opponent character on the display screen of the display section 103 (step S710). The flow then returns to step S304. After the display processing in step S710 is executed, the game processing in the second operation mode is not continued, and the game processing in the first operation mode is performed. Hence, in step S710 the CPU 201 also displays a message that prompts the player to slide the second main body 101b so that substantially the entire body of the second main body 101b overlaps the first main body 101a, on the display screen of the display section 103.

On the other hand, if the tension is lower than the predetermined threshold, the flow advances to step S711 to check with reference to data indicating the health power (to be abbreviated as HP hereinafter) of the opponent character held in the RAM 202 if an HP value = 0 (step S711).

If it is determined as a result of checking in step S711 that HP = 0, the flow advances to step S712 to display a message indicating that the player has succeeded to fish up the opponent character on the display screen of the display section 103 (step S712), and the flow returns to step S304.

On the other hand, if HP $\neq$ 0, the flow advances to step S713 to execute processing for reducing HP by an amount corresponding to the rotational velocity calculated in step S709 (step S713). For example, if the player has turned the handle section 102 more times, HP is reduced by a larger amount. On the window of Fig. 8B, reference numeral 803 denotes a gauge which indicates the HP value by means of its length, and the hatched portion indicates the remaining HP value. Therefore, when the HP is reduced, the length of the hatched portion (the length of the gauge) decreases.

Next, the CPU 201 checks if a predetermined period of time has elapsed after the control enters the battle mode (step S714). That is, since the battle with the opponent character must be done within the predetermined period of time (this "predetermined period of time" may vary depending on the types of opponent characters), if the predetermined period of time has elapsed, the flow advances to step S710 to display a message indicating that the player has failed to fish up the opponent character on the display screen of the display section 103, and the flow then returns to step S304.

On the other hand, if the predetermined period of time has not elapsed yet, the flow returns to step S706 to repeat the subsequent processes.

[Fifth Embodiment]

This embodiment will explain a portable game apparatus which provides a game for "fighting off" characters by shooting them.

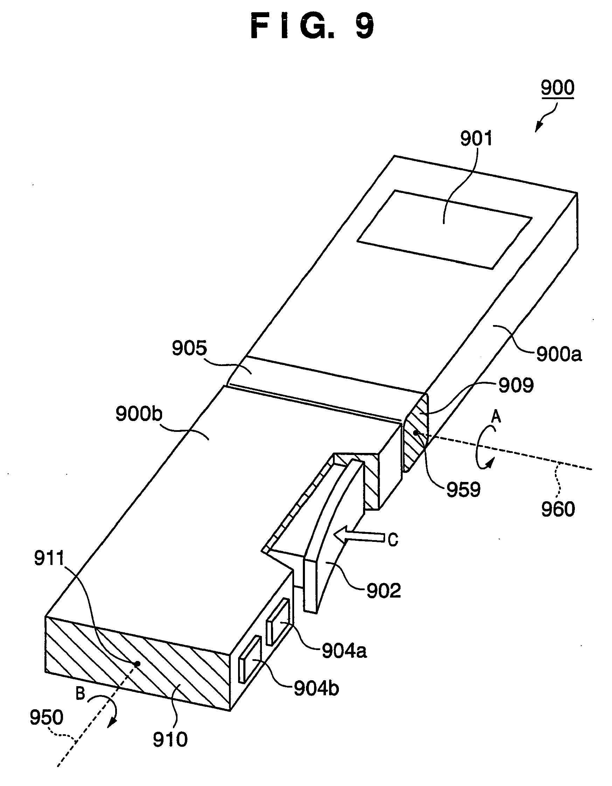

Fig. 9 shows the outer appearance of a portable game apparatus according to this embodiment. As shown in Fig. 9, a portable game apparatus 900 comprises a first main body 900a, second main body 900b, and member 905.

The first main body 900a is attached to the member 905 via a hinge (not shown) to be rotatable around an axis 960, which passes through a point 959 on a side surface 909 of the member 905 and is substantially perpendicular to the side surface 909, as indicated by arrow A.

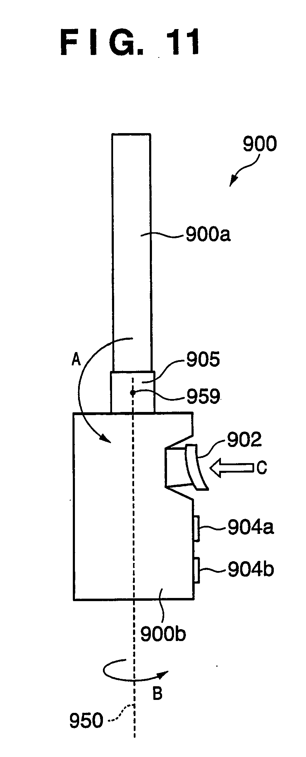

The second main body 900b is attached to the member 905 to be rotatable around an axis 950, which passes through a central point 911 on a bottom surface 910 of the second main body 900b and is substantially perpendicular to the bottom surface 910, as indicated by arrow B. Fig. 11 is a side view of the portable game apparatus 900 when the second main body 900b is rotated 90° around the axis 950. In this embodiment, processing associated with a second operation mode starts after the apparatus is set in the state shown in Fig. 11.

The first main body 900a comprises a display section 901. The display section 901 comprises, e.g., a liquid crystal display, and displays various game windows to be described later.

The second main body 900b comprises a trigger 902 and keys 904a and 904b. The trigger 902 is attached to the second main body 900b to be able to be pressed into it, as indicated by arrow C in Fig. 11. The keys 904a and 904b are used by the player to input various operation instructions. In the following description, the keys 904a and 904b will be referred as a "key group 904" together in some cases.

In the description of this embodiment, the portable game apparatus has the outer appearance arrangement shown in Figs. 9 and 11. However, the layout, shapes, and the like of the display section 901, the trigger 902 and key group 904 are not limited to those shown in Figs. 9 and 11, and various modifications can be made. As can be apparent from the following description, the following description can be applied to each of such modifications.

Fig. 9 and subsequent figures mainly show parts used in the following description, and do not show any parts such as a power switch, and the like, which do not constitute the gist of this embodiment.

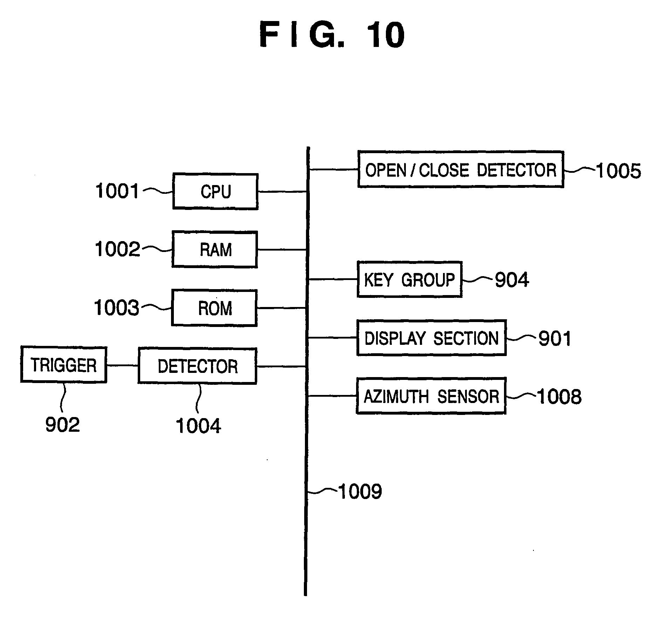

Fig. 10 is a block diagram showing the hardware arrangement of the portable game apparatus 900 according to this embodiment. Note that the same reference numerals in Fig. 10 denote the same parts as in Fig. 9, and a description thereof will be omitted.

Reference numeral 1001 denotes a CPU which controls the entire portable game apparatus 900 using programs and data stored in a ROM 1003, data temporarily held in a RAM 1002, and the like, and executes game processing to be described later. The CPU 1001 has an internal timer (not shown), which can measure time.

Reference numeral 1002 denotes a RAM which can provide various areas as needed such as an area for temporarily storing data which is being processed, an area for temporarily storing the pressing state of the trigger 902 detected by a detector 1004 as data, an area for temporarily storing the detection result of an azimuth sensor 1008 as data, a work area used by the CPU 1001 upon executing various kinds of processing, and the like.

Reference numeral 1003 denotes a ROM which stores programs and data required to make the CPU 1001 control the overall portable game apparatus 900 and execute game processing to be described later. The stored data include parameters associated with characters, and the parameters include initial vital forces (or health powers), weights, and the like of characters. The data also include parameters that specify the initial number of bullets fired by pulling the trigger 902 and their teeth. These parameters are loaded onto the RAM 1002 and are used in processing, as needed.

Reference numeral 1004 denotes a detector which detects whether or not the trigger 902 is pressed. The detection result is held in the RAM 1002 as data.

Reference numeral 1005 denotes an open/close detector. As described above, the first main body 900a is rotatable around the axis 960 with respect to the member 905, and has a state in which the first main body 900a is fully rotated to one side, and a state in which it is fully rotated to the other side. The open/close detector 1005 detects one of the former state (a state in which substantially the entire body of the first main body 900a overlaps the second main body 900b) and the latter state (a state in which the first and second main bodies 900a and 900b do not overlap each other), and notifies the CPU 1001 of that detection result.

When the detection result indicates the former state, the CPU 1001 sets the operation mode of the portable game apparatus 900 in the first operation mode; when the detection result indicates the latter state, the CPU 1001 sets the operation mode of the portable game apparatus 900 in the second operation mode. The first and second operation modes will be described later.

Reference numeral 1008 denotes an azimuth sensor which detects the azimuth of the main body. The detection result is held in the RAM 1002 as data. Note that the detection precision of the azimuth sensor 1008 is not particularly limited.

Reference numeral 1009 denotes a bus which interconnects the aforementioned sections.

As for the main processing to be executed by the portable game apparatus 900 (CPU 1001), this embodiment has the game contents themselves different from the first embodiment, but it is the same as the first embodiment on the issue of executing processing according to the first and second operation modes. In case of this embodiment, the program and data for making the CPU 1001 execute this main processing are stored in the ROM 1003. When the CPU 1001 executes processing using these program and data, the portable game apparatus 900 according to this embodiment executes this main processing. Execution of this main processing is started when the player turns on the power switch of the portable game apparatus and inputs a game start instruction using the key group 904.

The game processing in the first operation mode and that in the second operation mode will be respectively described below.

<Game processing in First Operation Mode>

The processing in the first operation mode is basically the same as that in the first embodiment. That is, characters to be fought off are virtually located within a surrounding region having the position of the azimuth sensor 1008 as the center, and appropriate azimuth angles and (virtual) distances are given to characters to be located. After the characters are located, individual characters are moved, and the location distribution of the characters is displayed on the display screen of the display section 901. When characters corresponding to markers are located within a predetermined distance range with respect to the position of the azimuth sensor 1008, processing for notifying a message that advices accordingly is executed.

<Game processing in Second Operation Mode>

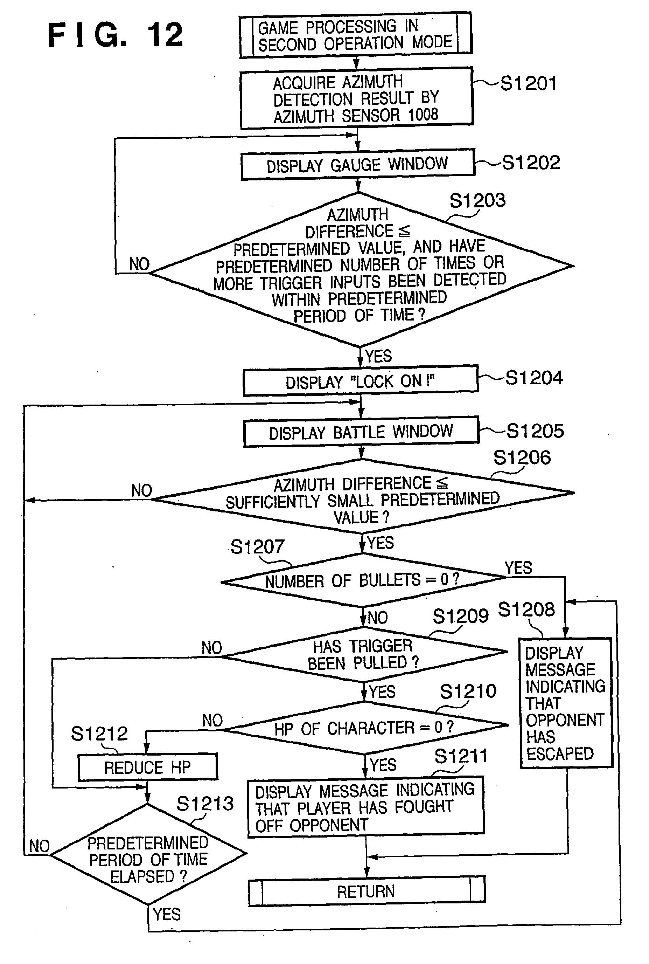

The game processing in the second operation mode will be described below. Fig. 12 is a flowchart showing the game processing in the second operation mode.

When the control enters the second operation mode, the CPU 1001 activates the azimuth sensor 1008 to detect the azimuth of the azimuth sensor 1008 itself, and stores the detected azimuth in the RAM 1002 as data (step S1201).

Next, the CPU 1001 refers to the azimuth angles of the respective characters managed in the RAM 1002 to specify a character having an azimuth angle closest to the azimuth acquired in step S1201, and displays a gauge window having a length according to the difference (azimuth difference) between the azimuth angle of the specified character and the azimuth acquired in step S1201 on the display screen of the display section 901 (step S1202). The gauge window is basically the same as that shown in Fig. 8A. Note that bullet images may be used in place of the gauge blocks since the game contents of this embodiment lie in "fighting off characters by shooting bullets". When the azimuth difference becomes equal to or smaller than a predetermined value, the image of the character located at the azimuth angle closest to the azimuth acquired in step S1201 is displayed on the area 802 on the window of Fig. 8A. In this case, the player may be audibly notified of that fact, or if the portable game apparatus 900 comprises an LED, he or she may be notified of that fact by flickering the LED. In either case, the notification mode is not particularly limited as along as the purpose of notifying that the azimuth difference becomes equal to or smaller than the predetermined value remains the same.

After the gauge length becomes maximum (i.e., when the azimuth difference becomes sufficiently small), the player must pull the trigger 902 a predetermined number of times or more within a predetermined period time (e.g., within 1 sec) to fight off the character. Processing for specifying the number of times of pulling the trigger after the gauge length becomes maximum is implemented in such a manner that, for example, the CPU 1001 starts time measurement when the gauge length becomes maximum, and it counts the number of times of detection of pulling of the trigger 902 by the detector 1004 after the start of time measurement. When the count value becomes equal to or larger than a predetermined value before an elapse of the predetermined period of time, it is determined that the "trigger 902 has been pulled a predetermined number of times or more within the predetermined period of time".

The CPU 1001 checks by the aforementioned method if the trigger 902 has been pulled a predetermined number of times or more within the predetermined period of time after the azimuth difference becomes sufficiently small (step S1203). If the trigger 902 has not been pulled yet, the flow returns to step S1202; otherwise, the flow advances to step S1204.

In step S1204, the CPU 1001 displays, on the display screen of the display section 901, a message indicating that the battle starts with the character, which is displayed on the area 802 (step S1204). For example, the CPU 1001 displays a message "LOCK ON!" on the display screen of the display section 901. Then, the CPU 1001 displays the battle window shown in Fig. 8B on the display screen of the display section 901 (step S1205). In case of this embodiment, the window shown in Fig. 8B displays the gauge 801 using bullet images as gauge blocks. When the battle has started, since the character as an opponent begins to move for escape, the azimuth angle of this character changes sequentially. Therefore, in step S1205 the CPU 1001 further displays the direction in which the portable game apparatus 900 is to face on the display screen of the display section 901 so that the azimuth of the portable game apparatus 900 matches that of the opponent character. When the azimuth difference between the azimuth of the portable game apparatus 900 and that of the opponent character becomes equal to or smaller than the predetermined value, the image of the opponent character is displayed on the area 802 on the window of Fig. 8B. These processes are the same as those in the fourth embodiment.

Next, the CPU 1001 checks if the azimuth difference is equal to or smaller than a sufficiently small predetermined value (step S1206). If the azimuth difference is not smaller than the predetermined value, the flow returns to step S1205. On the other hand, if the azimuth difference is equal to or smaller than the predetermined value, the flow advances to step S1207 to check if the number of currently remaining bullets is zero (step S1207). As a result of checking, if the number of remaining bullets is zero, the flow advances to step S1208 to display a message indicating that the opponent character has escaped on the display screen of the display section 901 (step S1208). After that, the flow returns to step S304. After the display processing in step S1208 is executed, the game processing in the second operation mode is not continued, and the game processing in the first operation mode is performed. Hence, in step S1208 the CPU 1001 also displays a message that prompts the player to rotate the first main body 900a so that the first main body 900a overlaps the second main body 900b, on the display screen of the display section 901.

On the other hand, if the number of remaining bullets is not zero, the flow advances to step S1209 to check if the detector 1004 detects that the trigger 902 has been pulled since step S1206 (step S1209). As a result of checking, if the detector 1004 does not detect that the trigger 902 has been pulled, the flow jumps to step S1213; otherwise, the flow advances to step S1210.

The CPU 1001 checks in step S1210 with reference to data indicating the health power (to be abbreviated as HP hereinafter) of the opponent character held in the RAM 1002 if an HP value = 0 (step S1210).

If it is determined as a result of checking in step S1210 that HP = 0, the flow advances to step S1211 to display a message indicating that the player has fought off the opponent character on the display screen of the display section 901 (step S1211), and the flow returns to step S304.

On the other hand, if HP ≠ 0, the flow advances to step S1212 to execute processing for reducing HP (step S1212). As for an amount to be reduced, a predetermined value may be used or an amount may be determined according to the teeth of bullets which are used currently. When the window shown in Fig. 8B is used as the battle window, the length of the hatched portion (gauge length) is shortened when the HP is reduced.

Next, the CPU 1001 checks if a predetermined period of time has elapsed after the control enters the battle mode (step S1213). That is, since the battle with the opponent character must be done within the predetermined period of time (this "predetermined period of time" may vary depending on the types of opponent characters), if the predetermined period of time has elapsed, the flow advances to step S1208 to display a message indicating that the opponent character has escaped on the display screen of the display section 901, and the flow then returns to step S304.

On the other hand, if the predetermined period of time has not elapsed yet, the flow returns to step S1205 to repeat the subsequent processes.

## Claims

1. A game apparatus which comprises an operation unit that can be turned by a player, a display unit, and an input unit, comprising:

    an azimuth sensor for detecting an azimuth;
    a memory for, when characters are virtually located around a position of the azimuth sensor, holding location information indicating a relative positional relationship between each character and the azimuth sensor;
    detection means for detecting an input of an operation mode of one of a first operation mode and a second operation mode; and
    processing means for performing game processing corresponding to the operation mode detected by the detection means, and
    in that when the detection means detects the input of the first operation mode,
    the processing means controls the display unit to display a location distribution of at least one character, with reference to the location information of the at least one character held in the memory, and
    when the detection means detects the input of the second operation mode,
    the processing means controls the display unit to display a location distribution of the characters located in azimuths near the azimuth detected by the azimuth sensor, with reference to the location information of each character held in said memory, and
    said processing means performs game processing in accordance with an operation result to the input unit and the operation unit in correspondence with a display state on the display unit.

2. The apparatus according to claim 1, wherein said memory holds, as the location information, a set of an azimuth angle from the position of said azimuth sensor to the location of each character, and a distance from the position of said azimuth sensor to the location of each character.

3. The apparatus according to claim 1 or 2, wherein when said detection means detects the input of the second operation mode, and when an operation input from the input unit is detected within a predetermined period of time after a display timing of the location distribution of characters, the number of which is not less than a predetermined value M, on the display unit, said processing means controls to start a first step,

when an operation input from one of the operation unit and the input unit is detected within a predetermined period of time after a display timing of the location distribution of characters, the number of which is not less than a predetermined value N (N > M) after the start of the first step, said processing means controls to start a second step, and

said processing means controls the display unit to display a message indicating battle with a character, and to make a display according to an operation result to the operation unit after the start of the second step.

4. The apparatus according to claim 1, 2 or 3, wherein the location distribution of the characters is a relative location relationship between individual characters.

5. A game apparatus which comprises an operation unit that can be turned by a player, a display unit, and an input unit, comprising:

> an azimuth sensor for detecting an azimuth;
> a memory for, when characters are virtually located around a position of said azimuth sensor, holding location information indicating a relative positional relationship between the characters and said azimuth sensor;
> means for controlling the display unit to display a location distribution of characters located in azimuths near the azimuth detected by said azimuth sensor with reference to location information of each character held in said memory; and
> processing means for performing game processing in accordance with an operation result to the input unit and the operation unit in correspondence with a display state on the display unit.

6. A game apparatus which comprises an operation unit that can be turned by a player, a display unit, and an input unit, comprising:

> an azimuth sensor for detecting an azimuth;
> a memory for, when characters are virtually located around a position of said azimuth sensor, holding location information indicating a relative positional relationship between each character and said azimuth sensor;
> detection means for detecting an input of an operation mode of one of a first operation mode and a second operation mode; and
> processing means for performing game processing corresponding to the operation mode detected by said detection means, and
> in that when said detection means detects the input of the first operation mode,
> said processing means controls the display unit to display a location distribution of at least one character based on the location information of the at least one character held in said memory,
> when said detection means detects the input of the second operation mode,
> said processing means controls the display unit to make a display indicating a probability of occurrence of battle with a character located in an azimuth closest to the azimuth detected by said azimuth sensor with reference to the location information of each character held in said memory, and
> when the battle has occurred, said processing means performs game processing in accordance with an operation result to the input unit and the operation unit in correspondence with a display state on the display unit.

7. A game apparatus which comprises an operation unit that can be turned by a player, a display unit, and an input unit, comprising:

> an azimuth sensor for detecting an azimuth;
> a memory for, when characters are virtually located around a position of said azimuth sensor, holding location information indicating a relative positional relationship between the characters and said azimuth sensor;
> means for controlling the display unit to make a display indicating a probability of occurrence of battle with a character located in an azimuth closest to the azimuth detected by said azimuth sensor with reference to location information of each character held in said memory; and
> means for, when the battle has occurred, performing game processing in accordance with an operation result to the input unit and the operation unit in correspondence with a display state on the display unit.

8. A game apparatus which comprises an operation unit and a display unit, comprising:

an azimuth sensor for detecting an azimuth;

a memory which holds, when characters are virtually located around a position of said azimuth sensor, location information indicating a relative positional relationship between each character and said azimuth sensor;

detection means for detecting an input of an operation mode of one of a first operation mode and a second operation mode; and

processing means for performing game processing corresponding to the operation mode detected by said detection means, and

in that when said detection means detects the input of the first operation mode,

said processing means controls the display unit to display a location distribution of at least one character with reference to the location information of the at least one character held in said memory, and

when said detection means detects the input of the second operation mode,

said processing means makes notification according to a difference between an azimuth of a character located in an azimuth closest to the azimuth detected by said azimuth sensor, and the azimuth detected by said azimuth sensor, with reference to the location information of each character held in said memory, and

said processing means performs game processing in accordance with a display state on the display unit or an operation result to the operation unit based on the notification result.

9. A method of controlling a game apparatus, which comprises an operation unit that can be turned by a player, a display unit, an input unit, an azimuth sensor for detecting an azimuth, and a memory, comprising:

a storage control step of storing, when characters are virtually located around a position of the azimuth sensor, location information indicating a relative positional relationship between each character and the azimuth sensor in the memory;

a detection step of detecting an input of an operation mode of one of a first operation mode and a second operation mode; and

a processing step of performing game processing corresponding to the operation mode detected in the detection step, and

in that the processing step includes steps of:

controlling, when the input of the first operation mode is detected in the detection step, the display unit to display a location distribution of at least one character based on the location information of the at least one character held in the memory, and

controlling, when the input of the second operation mode is detected in the detection step, the display unit to display a location distribution of the characters located in azimuths near the azimuth detected by the azimuth sensor, with reference to the location information of each character held in the memory, and performing game processing in accordance with an operation result to the input unit and the operation unit in correspondence with a display state on the display unit.

10. A method of controlling a game apparatus, which comprises an operation unit that can be turned by a player, a display unit, an input unit, an azimuth sensor for detecting an azimuth, and a memory comprising:

a storage control step of storing, when characters are virtually located around a position of the azimuth sensor, location information indicating a relative positional relationship between each character and the azimuth sensor in the memory;

a step of controlling the display unit to display a location distribution of characters located in azimuths near the azimuth detected by the azimuth sensor with reference to location information of each character held in the memory; and

a step of performing game processing in accordance with an operation result to the input unit and the operation unit in correspondence with a display state on the display unit.

11. A method of controlling a game apparatus, which comprises an operation unit that can be turned by a player, a display unit, an input unit, an azimuth sensor for detecting an azimuth, and a memory, comprising:

a storage control step of storing, when characters are virtually located around a position of the azimuth sensor, location information indicating a relative positional relationship between each character and the azimuth sensor in the memory;

a detection step of detecting an input of an operation mode of one of a first operation mode and a second operation mode; and

a processing step of performing game processing corresponding to the operation mode detected in the detection step, and

in that the processing step includes steps of:

controlling, when the input of the first operation mode is detected in the detection step, the display unit to display a location distribution of at least one character based on the location information of the at least one character held in the memory, and

controlling, when the input of the second operation mode is detected in the detection step, the display unit to make a display indicating a probability of occurrence of battle with a character located in an azimuth closest to the azimuth detected by the azimuth sensor with reference to the location information of each character held in the memory, and

performing, when the battle has occurred, game processing in accordance with an operation result to the input unit and the operation unit in correspondence with a display state on the display unit.

12. A method of controlling a game apparatus, which comprises an operation unit that can be turned by a player, a display unit, an input unit, an azimuth sensor for detecting an azimuth, and a memory, comprising:

a storage control step of storing, when characters are virtually located around a position of the azimuth sensor, location information indicating a relative positional relationship between each character and the azimuth sensor in the memory;

a step of controlling the display unit to make a display indicating a probability of occurrence of battle with a character located in an azimuth closest to the azimuth detected by the azimuth sensor with reference to location information of each character held in the memory; and

a step of performing, when the battle has occurred, game processing in accordance with an operation result to the input unit and the operation unit in correspondence with a display state on the display unit.

13. A method of controlling a game apparatus, which comprises an operation unit, a display unit, an azimuth sensor for detecting an azimuth, and a memory, comprising:

a storage control step of storing, when characters are virtually located around a position of the azimuth sensor, location information indicating a relative positional relationship between each character and the azimuth sensor in the memory;

a detection step of detecting an input of an operation mode of one of a first operation mode and a second operation mode; and

a processing step of performing game processing corresponding to the operation mode detected in the detection step, and

in that the processing step includes a step of:

controlling, when the input of the first operation mode is detected in the detection step, the display unit to display a location distribution of at least one character with reference to the location information of the at least one character held in the memory, and

the processing step also includes steps of:

making, when the input of the second operation mode is detected in the detection step, notification according to a difference between an azimuth of a character located in an azimuth closest to the azimuth detected by said azimuth sensor, and the azimuth detected by the azimuth sensor with reference to the location information of each character held in the memory; and

performing game processing in accordance with a display state on the display unit or an operation result to the operation unit based on the notification result.

14. A computer program comprising code means which, when executed in a game apparatus, instructs the game apparatus to perform the method of any one of claims 9 to 13.

# F I G. 1

# FIG. 2

EP 1 743 683 A1

# FIG. 3

```
            ┌──────────┐
            │  START   │
            └──────────┘
                 │
                 ▼
      ┌─────────────────────────┐
      │    SET OPERATION MODE    │──── S300
      └─────────────────────────┘
                 │
                 ▼
      ┌─────────────────────────┐
      │    GAME PROCESSING IN    │──── S302
      │   FIRST OPERATION MODE   │
      └─────────────────────────┘
                 │
                 ▼
      ┌─────────────────────────┐
      │    GAME PROCESSING IN    │──── S303
      │  SECOND OPERATION MODE   │
      └─────────────────────────┘
                 │
                 ▼
                                  S304
  NO          ◇ END OF GAME? ◇
                 │
                 │ YES
                 ▼
            ┌──────────┐
            │   END    │
            └──────────┘
```

EP 1 743 683 A1

# FIG. 4

# FIG. 5

EP 1 743 683 A1

# F I G. 6

```
┌─────────────────────────────────┐
│     GAME PROCESSING IN          │
│     SECOND OPERATION MODE       │
└─────────────────────────────────┘
                │
┌─────────────────────────────────┐
│ ACQUIRE AZIMUTH DETECTION       │  S601
│ RESULT BY AZIMUTH SENSOR 206    │
└─────────────────────────────────┘
                │
┌─────────────────────────────────┐
│           DISPLAY               │  S602
└─────────────────────────────────┘
                │
         ◇ M OR MORE? ◇  S603 ──NO──┐
                │ YES                │
         ◇ STANDBY MODE? ◇ S604 ─NO─┤
                │ YES                │
                │          ┌─────────┴──────────┐
                │          │  PREDETERMINED      │  S605
                │          │  KEY INPUT DETECTED │
                │◄───YES───│  WITHIN PREDETERMINED
                │          │  PERIOD OF TIME?    │
                │          └─────────┬──────────┘
         ◇ N (> M) OR MORE? ◇ S606   │ NO
                │ NO ───────────────►│
                │ YES            ┌────┴────┐
                │                │ RETURN  │
┌─────────────────────────────┐ └─────────┘
│ FLICKER IMAGE OF CHARACTER  │  S607
└─────────────────────────────┘
                │
         ◇ PREDETERMINED              ◇  S608
           NUMBER OF TIMES OR
           MORE OF KEY INPUTS DETECTED ──NO──┐
           WITHIN PREDETERMINED              │
           PERIOD OF TIME?                   │
                │ YES              ┌──────────┴────────────┐ S609
┌─────────────────────────────┐   │ DISPLAY MESSAGE INDICATING THAT │
│ DISPLAY "HIT! & BATTLE"     │   │ PLAYER HAS FAILED TO FISH UP    │
└─────────────────────────────┘   └──────────┬────────────┘
    ┌──────────►│ S610                   ┌────┴────┐
    │    ◇ TENSION ≥            ◇ S611   │ RETURN  │
    │      PREDETERMINED VALUE? ──YES──┐ └─────────┘
    │           │ NO                   │
    │ S612 ◇ HP OF CHARACTER = 0? ◇──YES──┐
    │           │ NO                      │
    │ ┌─────────────────┐ S614   ┌────────┴──────────┐ S613
    │ │   REDUCE HP     │        │ DISPLAY MESSAGE INDICATING THAT │
    │ └─────────────────┘        │ PLAYER HAS SUCCEEDED TO FISH UP │
    │           │                └────────┬──────────┘
    │    ◇ PREDETERMINED          ◇ S615  ┌────┴────┐
    │      PERIOD OF TIME ELAPSED? ──YES──│ RETURN  │
    │           │ NO                      └─────────┘
    └───────────┘
```

24

**F I G. 7**

GAME PROCESSING IN
SECOND OPERATION MODE

ACQUIRE AZIMUTH
DETECTION RESULT BY
AZIMUTH SENSOR 206 — S701

DISPLAY GAUGE WINDOW — S702

S704
AZIMUTH
DIFFERENCE ≦
PREDETERMINED VALUE, AND HAS
HANDLE SECTION BEEN TURNED BY
PREDETERMINED
AMOUNT ?

NO

YES

DISPLAY "HIT !" — S705

DISPLAY BATTLE WINDOW — S706

S707
NO    AZIMUTH DIFFERENCE ≦
SUFFICIENTLY SMALL PREDETERMINED
VALUE ?

YES

S709
TENSION ≧
PREDETERMINED VALUE ?    YES

NO

S711
S713    NO
HP OF CHARACTER = 0 ?

REDUCE HP    YES

S710
DISPLAY MESSAGE INDICATING
THAT PLAYER HAS FAILED TO
FISH UP

S714
NO    PREDETERMINED
PERIOD OF TIME
ELAPSED ?

RETURN

YES    DISPLAY MESSAGE INDICATING
THAT PLAYER HAS SUCCEEDED
TO FISH UP — S712

RETURN

# F I G. 8A

# F I G. 8B

# FIG. 9

# F I G. 10

1001 — CPU

1002 — RAM

1003 — ROM

TRIGGER — DETECTOR

902        1004

OPEN / CLOSE DETECTOR — 1005

KEY GROUP — 904

DISPLAY SECTION — 901

AZIMUTH SENSOR — 1008

— 1009

EP 1 743 683 A1

# F I G. 11

29

**F I G. 12**

GAME PROCESSING IN
SECOND OPERATION MODE

ACQUIRE AZIMUTH
DETECTION RESULT BY
AZIMUTH SENSOR 1008 — S1201

DISPLAY GAUGE WINDOW — S1202

S1203

AZIMUTH
DIFFERENCE ≦
PREDETERMINED VALUE, AND HAVE
PREDETERMINED NUMBER OF TIMES OR
MORE TRIGGER INPUTS BEEN DETECTED
WITHIN PREDETERMINED
PERIOD OF TIME ?

NO

YES

DISPLAY "LOCK ON !" — S1204

DISPLAY BATTLE WINDOW — S1205

S1206

AZIMUTH DIFFERENCE ≦
SUFFICIENTLY SMALL PREDETERMINED
VALUE ?

NO

YES

S1207

NUMBER OF BULLETS = 0 ?

YES

NO

S1209  S1208

HAS TRIGGER
BEEN PULLED ?

NO

DISPLAY
MESSAGE
INDICATING
THAT
OPPONENT
HAS
ESCAPED

YES  S1210

HP OF CHARACTER = 0 ?

NO

S1212

REDUCE HP

YES  S1211

DISPLAY MESSAGE INDICATING
THAT PLAYER HAS FOUGHT
OFF OPPONENT

S1213

PREDETERMINED
PERIOD OF TIME
ELAPSED ?

NO

YES

RETURN

**European Patent Office**

EUROPEAN SEARCH REPORT

Application Number

EP 06 25 3576

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 796 387 A (CURRAN ET AL) 18 August 1998 (1998-08-18) * column 3, line 64 - column 4, line 1 * ----- | 1-14 | INV. A63F13/00 |
| A | EP 1 114 660 A (KONAMI CORPORATION) 11 July 2001 (2001-07-11) * paragraph [0003] * ----- | 1-14 | |
| A | US 5 339 095 A (REDFORD ET AL) 16 August 1994 (1994-08-16) * abstract * ----- | 1-14 | |
| A | PATENT ABSTRACTS OF JAPAN vol. 1996, no. 07, 31 July 1996 (1996-07-31) & JP 08 071252 A (TAITO CORP), 19 March 1996 (1996-03-19) * the whole document * ----- | 1-14 | |
| A | PATENT ABSTRACTS OF JAPAN vol. 1995, no. 11, 26 December 1995 (1995-12-26) & JP 07 211196 A (SEGA ENTERP LTD), 11 August 1995 (1995-08-11) * the whole document * ----- | 1-14 | TECHNICAL FIELDS SEARCHED (IPC)  A63F |

The present search report has been drawn up for all claims

| Place of search | Date of completion of the search | Examiner |
|---|---|---|
| Munich | 5 October 2006 | Arnold, Stuart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 25 3576

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2006

| Patent document cited in search report | | Publication date | Patent family member(s) | | Publication date |
|---|---|---|---|---|---|
| US 5796387 | A | 18-08-1998 | US 6567071 | B1 | 20-05-2003 |
| EP 1114660 | A | 11-07-2001 | JP 2001190840 | A | 17-07-2001 |
| | | | US 2001007830 | A1 | 12-07-2001 |
| US 5339095 | A | 16-08-1994 | NONE | | |
| JP 08071252 | A | 19-03-1996 | JP 3422383 | B2 | 30-06-2003 |
| JP 07211196 | A | 11-08-1995 | NONE | | |

EPO FORM P0459

For more details about this annex : see Official Journal of the European Patent Office, No. 12/82

**EP 1 743 683 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3046095 A